# EUROPEAN PATENT APPLICATION

(11) **EP 2 899 680 A1**
(43) Date of publication of application: **29.07.2015**
(21) Application number: 14152161.7
(22) Date of filing: 22.01.2014
(51) Int. Cl.: G06Q 10/10, G06Q 50/32

(54) **A post handling system to be used when distributing physical letters**

(71) Applicant: M-JIT ApS, 2000 Frederiksberg (DK)
(72) Inventor: Zinn, Stig Christian, 4600 Køge (DK); Nielsen, Dinny Steve, 2000 Frederiksberg (DK)
(74) Representative: Chas. Hude A/S

(57) **Abstract**

The present invention relates to a post handling system to be used when sending a letter from a sender, said letter to be delivered as a physical letter at a postal address of a receiver, said system adapted for communicating with multiple geographically distributed printing and enveloping stations generating physical letters based on electronically received content information and addressee information, wherein said physical letters are to be delivered on postal routes, e.g. by a postal worker, wherein said system comprises
- means for receiving letter data comprising
o content information regarding the content of said letter
o address information identifying the postal address of the receiver,

- means for sorting and ordering said received letter data according to said address information,
- means for generating a printing list to a printing and enveloping station, wherein said printing list is made based on predefined postal routes and wherein said printing list is for printing letters in a sequence sorted according to said postal routes.

Thereby, a much simpler distribution process of collecting, sorting and distributing is obtained, where all steps are handled electronically, and where the letters are not generated in a postal route specific manner, until the letters are to be delivered on a postal route.

## Description

The present invention relates to a post handling system to be used when sending a letter from a sender, said letter to be delivered as a physical letter at a postal address of a receiver.

### Background of the invention

Even though electronic mail is used frequently and often replaces physical letters, physical letters are still used. There are different reasons for this such as physical letters sending specific signals to a receiver which signals cannot be obtained by an electronic mail.

Physical letters have been used for centuries for communicating between two parties, and a typical process of sending a letter from actual posting the letter until the letter is received at the postal address of the receiver is quite cumbersome and could comprise the following consecutive steps:
- Writing the letter.
- Printing the letter, if written in electronic format.
- Inserting the letter in an envelope.
- Adding a stamp to the envelope.
- Posting the letter e.g. by delivering the letter to a mailbox or to a post office.
- Postal workers collecting the letters and transporting them to a postal center.
- Performing an initial sorting of the letters at the postal center by manually separating letters suitable for being sorted by a machine from letters which are not suitable for being sorted by a machine.
- Sorting the suitable part of letters by reading the postal address on each letter and sorting the letters according to postal codes of the receiver identified on the letter. Some letters have details which cannot be read by the machine, these letters are manually sorted by a postal worker.
- Performing a second sorting for grouping according to predefined postal routes, this is done according to
   - Street names and
   - Receiver names,
- Delivering the sorted letters to local distribution branches for being delivered by postal workers.
- Finally, the postal worker at the local distribution branch first sorts mail which could not be sorted by the machine and then brings the sorted letters on the postal route for delivering to a receiver.

A cumbersome process as described above is further quite time-consuming, where the duration from posting a letter until the letter is received could be at least 12 hours and even longer for intercontinental letters.

A lot of various people have been involved in the process of collecting, sorting and distributing, which introduces a risk of a failure. The transportation of heavy mail from one postal center to another both continental and intercontinental is energy-consuming, and the used transportation means such as ships, planes, trains and cars are also polluting. Finally, the whole process is expensive.

Therefore, it is an object of the present invention to provide a solution overcoming at least some of the disadvantages of the prior art or providing at least a useful alternative.

### Summary of the invention

According to the present invention, this is obtained by a post handling system to be used when sending a letter from a sender, said letter to be delivered as a physical letter at a postal address of a receiver, said system adapted for communicating with multiple geographically distributed printing and enveloping stations generating physical letters based on electronically received content information and addressee information, wherein said physical letters are to be delivered on postal routes, e.g. by a postal worker, wherein said system comprises
- means for receiving letter data comprising
   ○ content information regarding the content of said letter
   ○ address information identifying the postal address of the receiver,
- means for sorting and ordering said received letter data according to said address information,
- means for generating a printing list to a printing and enveloping station, wherein said printing list is made based on predefined postal routes and wherein said printing list is for printing letters in a sequence sorted according to said postal routes.

Thereby, a much simpler distribution process of collecting, sorting and distributing is obtained, where all steps are handled electronically, and where the letters are not generated in a postal route specific manner, until the letters are to be delivered on a postal route.

The letter is handled electronically, and if the printing and enveloping stations are positioned at points of distribution, then the electronic form of the letter is maintained, until it arrives at the point of distribution and thereby, all mail handling is done electronically. Only at a printing and enveloping station geographically located nearby the postal address of the receiver, the letter is printed and enveloped and can thereafter be delivered to the postal address of the receiver, e.g. by a postal worker.

All letters are stored electronically and need not to be printed and enveloped before actual distribution.

The post handling system is a server system with data processing capabilities and with attached data storage. The server system communicates via a public communication network with the distributed printing and enveloping stations. The users can send letters using the system by logging on to a user front end of the post handling system via a browser, e.g. on their personal computer or smartphone.

In an embodiment, the system further comprises means for attaching a unique postal ID to said letter data. This ID makes it possible to order the letter based on corresponding ID's in the route data.

In an embodiment, the unique postal ID is attached to the printed letter, such as a Picture, QR code, bar code or similar. Thereby, the ID can be identified from the printed letter, e.g. for error tracing or route planning.

In an embodiment, the system further comprises means for identifying a printing and enveloping station geographically linked to said postal address of said receiver, said identification being based on the geographical position of said multiple geographically distributed printing and enveloping stations.. Thereby, the letters are printed and enveloped closest to their actual point of deliverance.

In an embodiment, the system further comprises means for debiting according to characteristics of the letter such as type of letter, number of pages, number of receivers and also locality of receiver. Thereby, payment for the service can easily be obtained.

In an embodiment, the system further comprises means for validating the received address information against stored valid postal address data. This ensures up-to-date addresses and reduces the risk of failures.

### Description of drawings

The invention is explained in details below with reference to the drawings in which:
Fig. 1 illustrates elements used for sending letters using a post handling system according to the present invention,
Fig. 2 illustrates the algorithm of sending a letter and receiving letter data at the post handling system according to the present invention,
Fig. 3 illustrates the algorithm of sorting letter data at a post handling system according to the present invention.

### Description of embodiments

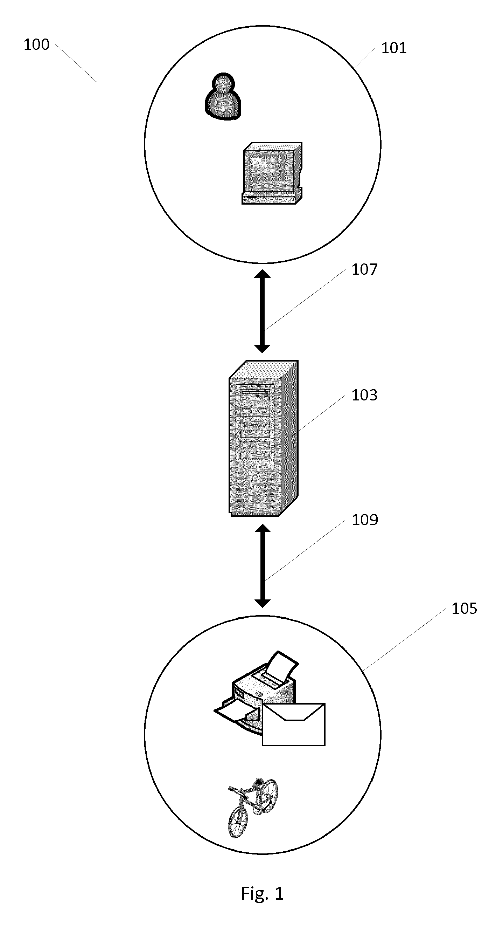

Fig. 1 illustrates elements used for sending letters using a post handling system 100 according to the present invention.

A working station 101 is for receiving letter data from a user, where the letter data comprises the content of the letter as well as information identifying the postal address of the receiver. The working station is also for transmitting the letter data to the post handling system.

The post handling system 103 is for receiving data from the working station 101 and for sorting and ordering letter data and for generating printing lists according to postal routes.

The printing and enveloping station 105 is for printing letters according to the generated printing lists and for inserting the letters in envelopes before delivery on a postal route, e.g. by a postal worker using a bicycle as transportation means.

The figure illustrates only one working station 101 and one printing and enveloping station 105 for printing and enveloping before delivery, but for effective post handling enabling geographically distributing letters at different locations, the post handling system 103 should be connected to multiple geographically distributed working stations 101 as well as several geographically distributed printing and enveloping stations 105.

Using this post handling system for sending letters, the letter is handled electronically until it arrives at the point of distribution and thereby, all mail handling is done electronically. Only at a printing and enveloping station geographically located nearby the postal address of the receiver, the letter is printed and enveloped and can thereafter be delivered to the postal address of the receiver, e.g. by a postal worker.

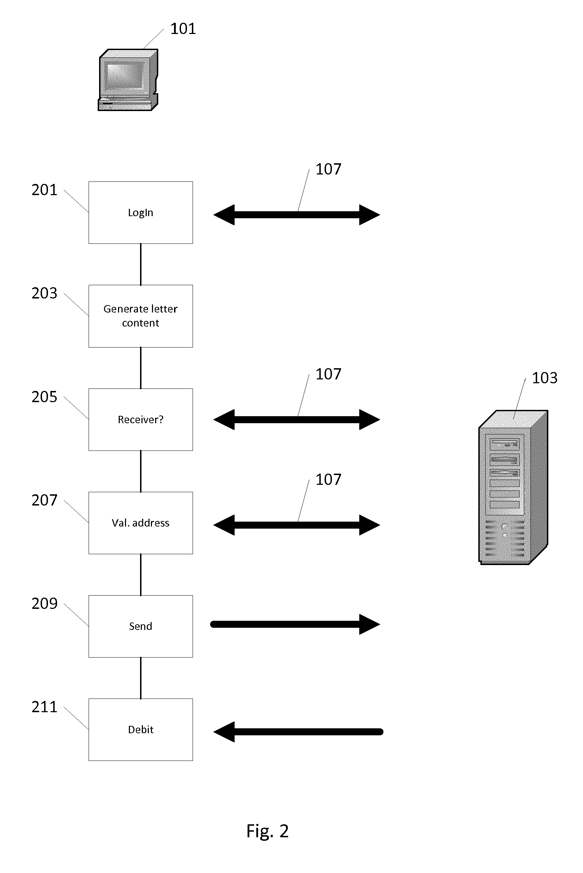

The sending process using a post handling system according to the present invention could be as follows and illustrated in Fig. 2:

A user logs onto means, being a working station with input means such as a keyboard, for receiving letter data including information regarding the content of said letter together with information identifying the postal address of the receiver.

These means could e.g. be a working station 101 and be based on a unique identifier. When logging on to the working station, an encrypted communication channel 107 is established between the working station and a post handling system 103. Next, the user either generates a letter or copies a letter from a storage medium, and the user decides, whether the letter should be communicated as a single letter or a letter for a group of people and then gives a send command, e.g. by pressing a button graphically illustrated on the user interface.

As an alternative, the letter could be generated and be available in electronic format before logging on to the working station, e.g. as a word processing file or a scan file representing a scan of a handwritten letter.

It is then requested 205 by the system to enter receiver data, identifying the postal address of the receiver. The postal address could either be entered manually, or it could be identified via a user specific database.

The working station could communicate with the post handling system through the encrypted communication channel 107 and thereby make it possible for the user to search for a receiver postal address between valid postal addresses stored in the post handling system.

When the postal address has been entered, it is validated 207 with postal address data stored at the post handling system 103 to ensure that the postal address of the receiver is a valid postal address. The validity is communicated to the user, whereupon the user can initiate sending of the letter. If there are problems in validating the postal address of the receiver, the user/sender could be given a number of options such as send anyway, locate receiver or do not send.

The content of the letter together with one or more receiver postal addresses are then sent 209 as letter data to the post handling system 103 via the encrypted connection 107. The indicated receiver postal addresses are all compared with an up-to-date database of valid postal addresses, and if any of the postal addresses seems invalid, the user is immediately informed and given the opportunity to correct any errors.

Thereafter, the user is debited 211 according to characteristics of the letter such as type of letter, number of pages, number of receivers and also locality of receiver.

Further, the user could be presented with different choices relating to the deliverance, such as envelope type, color of envelope, thickness of paper and even delivery date.

The letter data is now ready to be sorted according to postal routes and to be communicated via an encrypted connection to a printing and enveloping station near the postal route for delivery.

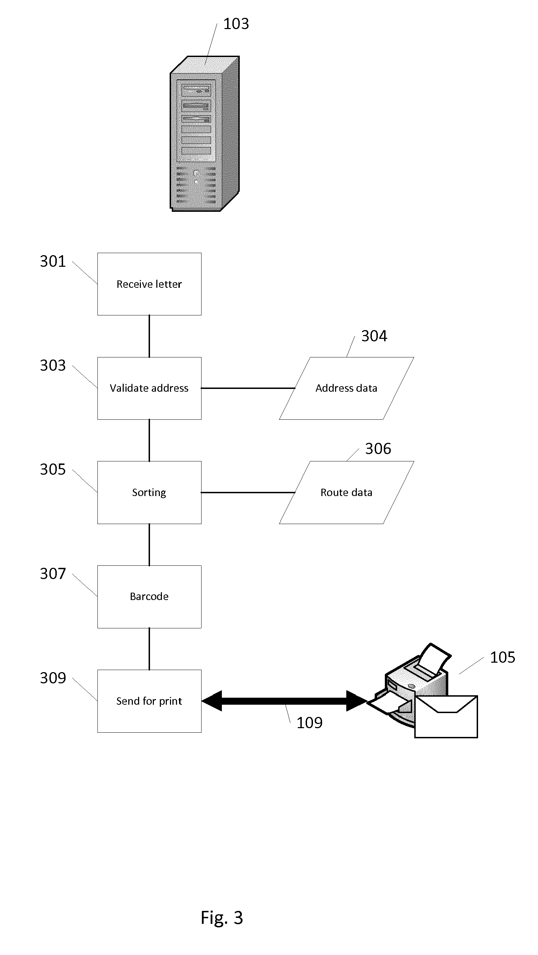

The sorting process using a postal handling system according to the present invention could be as follows and illustrated in Fig. 3.

In 301, the letter data is received at the post handling server 103. When receiving the letter data, the postal address is validated 303 against stored valid postal address data 304. This could be done according to a procedure, where postal address data is validated stepwise, e.g. by first validating country, then postal code, street, house number. If there is no match, then the user/sender is informed that the letter cannot be delivered.

A unique postal ID is attached to the letter data which could be in the form of a Picture, QR code, bar code or similar and which in a unique manner represents the postal address of the receiver. All postal addresses have a unique postal ID.

This unique postal ID is used for subsequent handling of the letter data and could further include information making it possible to identify the sender.

The unique postal ID representing a point of postal deliverance could be in the form a sequence number. This sequence number could comprise numbers as follows: C = country; P = post code; S = street; H = house number; F: Floor etc.) and e.g. be **C**42**P**4600**S**305**H**21**F**1).

Further, the unique postal ID could be linked to GPS coordinates of the actual position of the postal address. Thereby, routes could be generated based on maps.

The next step is to deliver the letter data for printing at a printing and enveloping station 105 linked to the postal address of the receiver. Before doing that and in order to ensure that the letter is printed in a sequence corresponding to the postal route, the letter data is sorted 305 according to route data 306.

Route data is basically an ordering of a group of unique postal ID's, where the specific unique postal ID's and an ordering of these correspond to a postal route. Groups of route data could be linked to various distribution branches. Route data could be generated and kept up-to-date in various ways.

By having route data comprising unique postal ID's and letter data linked with unique postal ID and by combining this, the letter data can be sorted according to route data, and the letters can be printed according to this.

One method could be that the post handling system comprises a database with all route data, and that this data is kept up-to-date by communicating with the distribution branches. Alternatively, it is possible to log on to the post handling system for updating route data.

Route data and thereby postal routes could change for several reasons, e.g. because better routes are identified, or because new houses are build, or old houses are removed. Further elements that influence a postal route are amount of time for delivering, geographical distance between postal addresses and amount of traffic at time of deliverance.

Route data could be generated in various manners, and one method could be that the route data is predefined, and the same postal routes are maintained from day to day, no matter how many letters are available for each route. In an alternative method, the route data is variable and generated from day to day, where the routes are generated in such a way that an equal number of letters are to be delivered on each postal route.

This sorting according to route makes it possible to print letters at the distribution branches in an order corresponding to the postal routes.

In an embodiment, the post handling system could generate printing lists to printing and enveloping stations, e.g. positioned at the distribution branches.

Each postal route could have a starting point, e.g. the distribution branch, and by placing a printing and enveloping station at these positions, the letter can be printed, enveloped and delivered on the postal route, e.g. by the postal worker. A number of postal addresses are linked to a postal route, and a group of postal routes are linked to a printing and enveloping station.

In 309, the letter data has been sorted and is send via a secure communication line 109 for printing and distributing.

In one embodiment, any user wishing to send a letter using the system only needs a working station (PC, tablet, smartphone, or the like) with access to the internet and could access a web page representing the post handling system, where registered users have a username and a password to access the system and buy the service. Examples have been given, where the terms post and letters are used. Post and letters cover any material that is to be distributed in paper format, such as commercial material, newspapers, leaflets, etc. Further, the system could be used for distributing material internally in a company, such a large multinational company with branches spread geographically.

## Claims

1. A post handling system to be used when sending a letter from a sender, said letter to be delivered as a physical letter at a postal address of a receiver, said system adapted for communicating with multiple geographically distributed printing and enveloping stations generating physical letters based on electronically received content information and addressee information, wherein said physical letters are to be delivered on postal routes, e.g. by a postal worker, wherein said system comprises
- means for receiving letter data comprising
o content information regarding the content of said letter
o address information identifying the postal address of the receiver,
- means for sorting and ordering said received letter data according to said address information,
- means for generating a printing list to a printing and enveloping station, wherein said printing list is made based on predefined postal routes, and wherein said printing list is for printing letters in a sequence sorted according to said postal routes.

2. A post handling system according to claim 1, wherein said system further comprises means for attaching a unique postal ID to said letter data.

3. A post handling system according to claim 2, wherein said unique postal ID is attached to the printed letter, such as a Picture, QR code, bar code or similar.

4. A post handling system according to claims 1-3, wherein said system further comprises means for identifying a printing and enveloping station geographically linked to said postal address of said receiver, said identification being based on the geographical position of said multiple geographically distributed printing and enveloping stations.

5. A post handling system according to claims 1-4, wherein said system further comprises means for debiting according to characteristics of the letter such as type of letter, number of pages, number of receivers and also locality of receiver.

6. A post handling system according to claims 1-5, wherein said system further comprises means for validating the received address information against stored valid postal address data.
